Europäisches Patentamt

(19) European Patent Office

Office européen des brevets

(11) Publication number : **0 389 297 B1**

(12) **EUROPEAN PATENT SPECIFICATION**

(45) Date of publication of patent specification :
23.11.94 Bulletin 94/47

(51) Int. Cl.⁵ : **H01F 1/34, G11B 5/62,**
**G11B 11/00**

(21) Application number : 90303138.3

(22) Date of filing : 23.03.90

(54) **A spin glass magnetic body, a magnetic recording medium and a magnetic recording apparatus.**

(30) Priority : 24.03.89 JP 72302/89
18.08.89 JP 211422/89

(43) Date of publication of application :
26.09.90 Bulletin 90/39

(45) Publication of the grant of the patent :
23.11.94 Bulletin 94/47

(84) Designated Contracting States :
DE FR GB

(56) References cited :
EP-A- 0 257 530
WO-A-89/06038
JP-A-63 117 357
JOURNAL OF PHYSICS. F: MET. PHYS, vol. 16,
1986, great Britain, N. SAITO et al."Micto-
magnestism of Fe-rich Fe-Zr amorphons al-
loys
studied by AC susceptibility in a superposed
DC field,pages 311-919
JOURNAL OF APPLIED PHYSICS, vol. 52, no.
3, part III, March 1981, New York A.BERTON et
al. "Remanent magnetization and thermal
relaxation in a frustratedspin-glass: Eu1-
xGdS" pages 1763-1765
JOURNAL OF PHYSICS. F, METAL PHYSICS,
vol. 11, no. 10, 1981, Great Britain BIV.B. SAR-
KISSIAN "The appearance of critical be-
haviour at the onset offerromagnetism in
AuFe alloys" pages 2191-2208

(56) References cited :
JOURNAL OF MAGNETISM AND MAGNETIC
MATERIALS, vol. 31-34, part III, 1983,Evan-
ston, USA K. KATSUMATA "Experiments on
randomly mixed magnets withcompeting in-
teractions" pages 1435-1438
JOURNAL DE PHYSIQUE, vol. 46, no. 2, Feb-
ruary 1985, GrenobleCedex, France B.DIENY,
B. BARBARA "Random anisokopy effects on
the phase transition ofamorphous DyxGd1-
xNi" pages 293-302
JOURNAL DE PHYSIQUE, vol. 49, no. 12, De-
cember 1988, Japan T. SAITO et al.
"Magnetic properties of amorphous DyxFe1-x
thin films" pages C8-1235-C8-1236

(73) Proprietor : Kabushiki Kaisha Toshiba
72, Horikawa-cho
Saiwai-ku
Kawasaki-shi (JP)

(72) Inventor : Okuno, Shiho, c/o Intellectual
Property Div.
K.K. Toshiba,
1-1 Shibaura 1-chome
Minato-ku, Tokyo 105 (JP)
Inventor : Hashimoto, Susumu, c/o Intellectual
Property Div.
K.K. Toshiba,
1-1 Shibaura 1-chome
Minato-ku, Tokyo 105 (JP)
Inventor : Inomata, Koichiro, c/o Intellectual
Property Div.
K.K. Toshiba,
1-1 Shibaura 1-chome
Minato-ku, Tokyo 105 (JP)

(74) Representative : Freed, Arthur Woolf et al
MARKS & CLERK,
57-60 Lincoln's Inn Fields
London WC2A 3LS (GB)

## Description

This invention concerns a spin glass magnetic body, a magnetic recording medium using this body, and a magnetic recording apparatus using this medium.

Spin glass magnetic bodies are materials which are frozen into irregular spin patterns without any magnetic order below a certain critical temperature (spin freezing temperature). Owing to this peculiar property, various studies have been carried out on spin glass magnetic bodies.

The following are examples of spin glass magnetic bodies known in the prior art:

(1) Systems wherein magnetic elements are fine dilutely contained in non-magnetic metals.

(2) Compound magnetic bodies wherein there are con-competing positive and negative exchange interactions.

(3) Amorphous alloys containing a large amount of magnetic elements.

Examples of (1) are systems wherein approx. 0.5 - 30 atm% of magnetic elements such as Mn and Fe are contained in non-magnetic metals such as Cu, Au and Pt (J.Phys.F.11 (1981), 2191).

Examples of (2) are $Eu_{1-x}Gd_xS$(J.Appl.Phys., 52 (1981), 1763), $Rb_2Mn_{1-x}Cr_xCl_4$ (J.Mag.Mag.Mat.31-34 (1983), 1435), or the like.

Examples of (3) are systems such Fe-La, Fe-Ce, Fe-Zr, and Fe-Lu (J.Phys.F. 16 (1986), 911), and 3d transition metal - rare earth element systems such as Fe-Dy and Ni-Dy (J.Physeque 46 (1985), 293, J.Physique, Suppl. 12 (1988), C8-1235).

These materials however are impractical for the following reasons.

Firstly, the materials of type (1) which are known have a low freezing temperature (AuFe system ~ 50K), and their spin glass properties cannot be used at ambient temperature.

The 2 magnetic substances mentioned which belong to the class of materials of type (2) basically exist in the form of bulk crystals. It is therefore difficult to increase their surface area, and their freezing temperatures are also extremely low (20K and 10K respectively).

Finally, the amorphous alloys of type (3) have a low freezing temperature, and poor resistance to oxidation.

Spin glass magnetic bodies have therefore been known in the prior art, but they were not suitable for commercial application.

EP-A-0257530 discloses magnetic recording apparatus for recording information on a magnetic recording medium. The apparatus heats the recording medium to a temperature which is higher than the Curie temperature. A magnetic field is applied to the recording medium while it cools.

It is an object of the present invention to provide a spin glass magnetic body with a high freezing temperature which permit increase of surface area, and which can be used commercially.

It is another object of the present invention to provide a magnetic recording medium using said spin magnetic body.

It is still another object of the present invention to provide a magnetic recording apparatus using such a medium.

According to one aspect of the present invention, tere is provided a spin glass magnetic body having an amorphous or microcrystalline ferrite composition.

According to another aspect of the present invention, there is provided a magnetic recording medium comprising a substrate, and a recording layer including a spin glass magnetic body on the substrate, the spin glass magnetic body having an amorphous or microcrystalline ferrite composition.

According to a further aspect of the present invention, there is provided a magnetic recording apparatus in combination with a magnetic recording medium having a recording layer including a spin glass magnetic body on a substrate, said spin glass magnetic body having an amorphous or microcrystalline ferrite composition, said apparatus comprising a heating means for heating the spin glass magnetic body of the recording layer above its spin glass freezing temperature, and a generating means for generating a magnetic field which applies the field to said recording layer while it is cooling, and is able to vary the field between at least 2 values.

This invention can be more fully understood from the following detailed description when taken in conjunction with the accompanying drawings, in which:

Fig. 1 is a drawing showing the temperature characteristics of the magnetization of the spin glass . body of the present invention;

Figs. 2 and 3 are drawings showing an outline of the structure of the magnetic recording medium and magnetic recording apparatus of this invention;

Figs. 4A and 4B are drawings describing the method by which information is recorded on the magnetic recording medium of the present invention;

Fig. 5 is a drawing showing the temperature characteristics of the magnetization of the spin glass body when in the form of a recording layer, in the case where information with multiple values is recorded on the information recording medium of the present invention;

Figs. 6 and 7 are drawings showing the X-ray diffraction pattern of the spin glass magnetic body in one example of the present invention;

Figs. 8 and 9 are drawings showing the temperature variation of the magnetization of the spin glass magnetic body in one example of the present invention;

Fig. 10 is a drawing showing the temperature variation of the magnetic susceptibility of the spin glass magnetic body in one example of this invention; and

Fig. 11 is a drawing showing the magnetization curve of the bias layer used as the magnetic recording medium in this invention.

The spin glass magnetic body of this invention preferably a thin film of a microcrystalline ferrite composition, and it is characterized in that spins of the magnetic ions has been frozen without the long range order below a specific temperature.

Spin glass magnetic bodies have a paramagnetic state at high temperatures, but at low temperatures interaction between spins increase and a certain type of magnetic order is produced. The magnetic order referred to here however is not a uniform order like that of ferromagnetism or antiferromagnetism. Instead, there is an irregular spin configuration, and the AC magnetic susceptibility shows a cusp at a certain transition temperature (spin freezing temperature or critical temperature referred to hereafter as $T_f$). Spin glass magnetism is often observed in alloys containing a dilution of magnetic elements, amorphous alloy systems, and compound magnetic systems containing competing positive and negative exchange interactions. It is however not limited to such cases, and any material of which the AC magnetic susceptibility shows a cusp as described above is known as a spin glass in the wide sense of the term.

The magnetic behavior of spin glass magnetic bodies has been known in the prior art, but their spin freezing temperature was of the order of several tens of degrees K below room temperature, and no efforts were made to apply them commercially. The inverters were the first to discover that oxide thin films such as those of ferrite compositions were spin glass magnetic bodies, that they have a spin freezing temperature of room temperature or more, and that their spin glass behavior has practical application. They also discovered that if such oxide compounds are amorphous or microcrystalline, they can become spin glass magnetic bodies.

Spin glass magnetic bodies may be formed by one of the following processes (1) - (3):

(1) When ferrite crystals with ferrimanetism are given a topological disorder, for example some of the crystals which originally had a square lattice may be given a triangular lattice. As a result, negative exchange interactions compete with each other, the spins are frustrated and a spin glass magnetic body is formed.

(2) When the arrangement between different magnetic atoms of the oxide ferrimagnetic body is given a disorder, exchange interactions compete with each other, the spins are frustrated, and a spin magnetic glass body is formed.

(3) When the film is formed clusters of several 10 - several 1000 Å (10 Å = 1 nm) which give broad peaks by X-ray diffraction as an amorphous state, some magnetic order exists within these clusters, and there is no long-range order between them, the film assumes a spin glass state.

The spin glass state cannot arise in crystals with a well-ordered atomic arrangement. An imperfect atomic arrangement can easily be produced by various techniques such as not carrying out post-annealing after forming the film on the substrate at room temperature.

In principle, the film is amorphous, but it may however contain microcrystals in admixture to the extent that a broad peaks are formed by the X-ray diffraction pattern.

There is no special limitation on the chemical composition, but it is desirable that one of the component elements is Co as Co ions produce the effect of random anisotropy. The basic composition of Co ferrite is $(Co, Fe)_3O_4$, but there may be some oxygen deficiencies in the compound or it may contain additional components without adverse effect. The proportion of Co is preferably no less than 10 atomic %, and more preferably 30 to 70 atomic %.

Spin glass magnetic bodies consisting of a thin film of a ferrite composition, and in particular those containing Co, are characterized in that the spin glass temperature is in the region of 300 K. This is much higher than that of conventional spin glass magnetic bodies which is of the order of several 10 K.

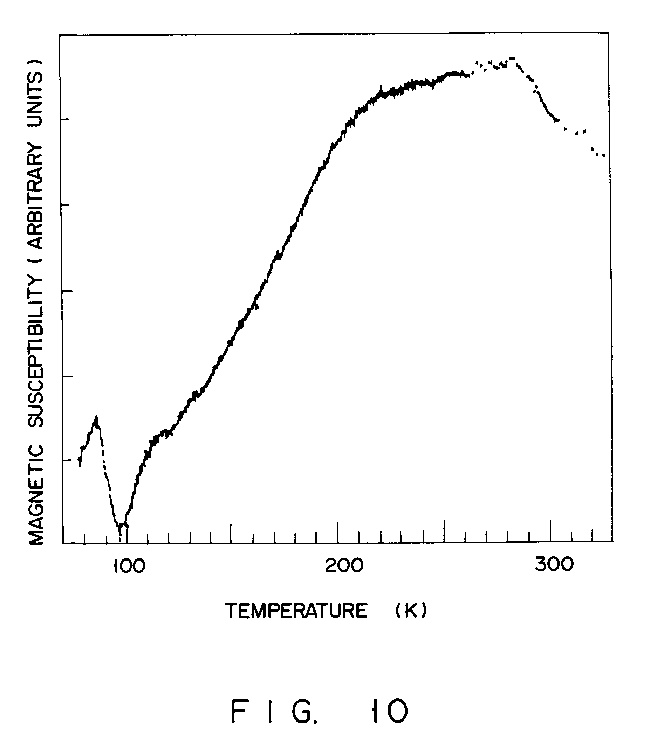

It has been established that spin magnetic bodies with this ferrite composition show a special behavior with regard to the curve of temperature variation of magnetic susceptibility which is not found in conventional spin glasses (see Fig. 10), namely, that the temperature variation of magnetic susceptibility has a plurality of local maximum values.

It is not certain that there is any direct connection between the fact that there are several extreme values and the fact that the spin freezing temperature is high, but it is a characteristic feature of the spin glass magnetic body of the present invention. Alternatively, it may be said that the spin glass magnetic body of this invention is characterized in that the curve of temperature variation of magnetic susceptibility has several local maximum values.

Next, we shall explain the manufacturing method of the spin glass magnetic body of the present invention. The spin glass magnetic body of the present invention may be manufactured by radio-frequency sputtering, ion beam sputtering or by any means of forming thin films. Hereafter, we shall describe their formation by ion beam sputtering.

Firstly, raw materials such as component oxides of the magnetic body or carbonates or nitrates which give these oxides on calcination, for example $Fe_2O_3$ and $Co_3O_4$, are mixed in the desired proportion, subjected to pre-sintering, crushing and sintering, and a sputtering target is obtained from the sinter. The target is not limited to these compound oxides, however, it being possible to use metal targets or even several targets to advantage.

The target is installed in the specified position in the sputtering apparatus, and after evacuating the apparatus to a vacuum of no more than $8 \times 10^{-4}$ Pa ($6 \times 10^{-6}$ Torr), Ar gas is supplied to the ion gun, ionized and accelerated, and the target is sputtered. A thin film is thus formed by building up secondary sputtering particles on a suitable substrate. It is desirable moreover that the oxygen gas is introduced near the substrate, and the film is deposited in a reactive atmosphere. The composition of the film formed is not necessarily identical to that of the target, but film composition may be controlled by suitably controlling the target composition. Further, the oxygen content of the film varies slightly with the oxygen gas concentration when it is produced, and an oxygen deficiency may occur. However even if an oxygen deficiency does occur, a film with spin glass behavior is still obtained, so some degree of deficiency can be tolerated.

We shall now describe a magnetic recording medium applying the spin glass magnetic body of this invention.

In recent years, many kinds of magnetic recording techniques have been developed and applied commercially. As examples, we may mention recording/reproduction with magnetic heads on magnetic recording media such as magnetic tape or magnetic disks, methods with a laser beam as heating source and an magneto-optical disk which is written on by an applied magnetic field and read by a magneto-optical effect, and bubble memories wherein recording/reproduction are performed via the presence or absence of bubble magnetic domains.

All of these techniques have their advantages and disadvantages, and are still in the process of further development. As examples, we may mention that improvements are being awaited in magnetic disks with even higher recording densities, and that establishment of overwrite technique are being awaited in magneto-optical disks.

The magnetic recording medium of this invention is concerned particularly with the special magnetic properties of spin glass magnetic bodies, that is, with the difference in magnetization when a spin glass magnetic body is cooled from above its spin freezing temperature in the presence of a magnetic field and when it is cooled in the absence of a magnetic field; and it is characterized by comprising a substrate and a magnetic recording layer formed of a spin glass magnetic body on the substrate. The magnetic recording medium of this composition makes it possible to record/reproduce information by a completely novel magnetic recording technique, record/reproduce information without the need for contact, easy overwriting, and high recording densities by multi-value recording.

We shall now describe the magnetic recording apparatus which records and reproduces information using such a magnetic recording medium.

The magnetic recording apparatus of this invention is characterized by comprising means to heat a magnetic recording layer of a magnetic recording medium, comprising a substrate and a magnetic recording layer formed from a spin glass magnetic body on the substrate, to a temperature above the spin freezing temperature, and means to generate a magnetic field which can vary the field applied to said spin glass magnetic body between at least 2 values when the magnetic recording layer is being cooled.

The magnetization of the spin glass magnetic body depends not only on the presence or absence of a field when it is being cooled from the temperature region above the spin freezing temperature, but also on the magnitude of the field. The presence of absence of the field may therefore be arranged to correspond to the recording of "0" and "1" respectively, while if the applied field is varied in several steps, the magnetization of the spin glass magnetic body can be made to take corresponding values to permit multi-value recording.

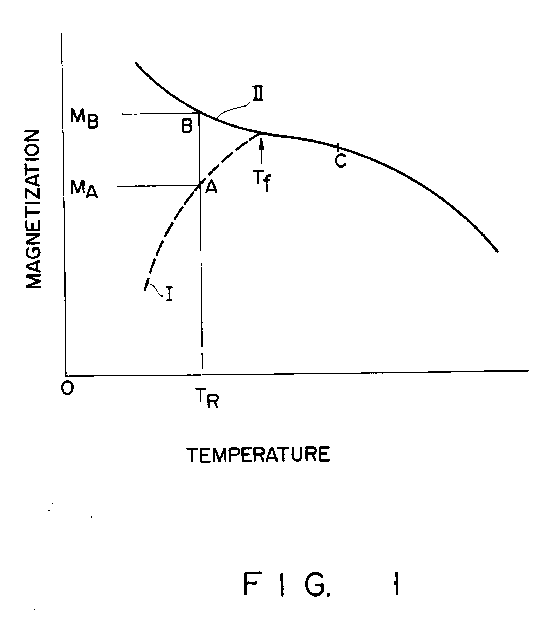

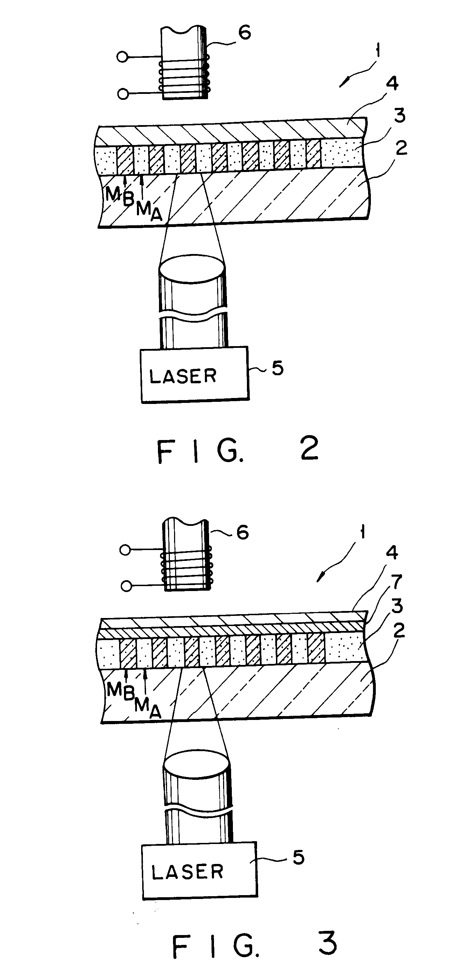

The case of the recording of 2 values, "0" and "1" will be explained with Fig. 1. Fig. 1 shows the temperature variation of the magnetization of the spin glass magnetic body. In the figure, "I" is the case of cooling without a magnetic field, and "II" is the case of cooling with a field. Both curves exhibit the same behavior at a temperature higher than $T_f$, but the behavior is different below $T_f$. Now, let us set the room temperature ($T_R$) below $T_f$, and let the initial magnetization of the magnetic body ("0") be $M_A$. When the magnetic body is heated to a temperature region above $T_f$ (for example C), and it is cooled while applying a magnetic field, the magnetization changes to $M_B$. If this state is "1", "1" is recorded by cooling the body in the presence of a magnetic field. As this process is effective even over a very small region, high recording densities can be achieved.

Further, if the magnetic body is heated to a temperature above $T_f$, and then cooled in the absence of the field, the state $M_B$ can be reversed to $M_A$, and in this way it is possible to erase the recorded information.

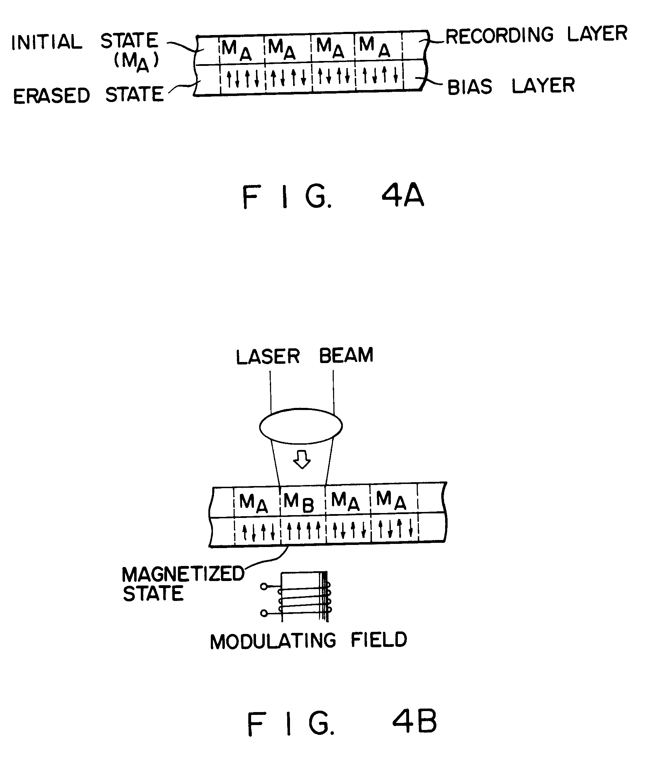

We shall here give an outline of the apparatus used to implement this magnetic recording method with reference to Fig. 2.

Firstly, a magnetic recording layer 3 of a spin glass magnetic body is formed on a transparent substrate 2, and a magnetic recording medium 1 is manufactured by covering layer 3 with a reflecting layer 4. These layers may be formed by sputtering or any film-forming technique.

The means of heating recording layer 3 may be any means capable of heating part of the layer locally, and a laser is preferable for this purpose. In this case, laser 5 used as the heating means is disposed such that it can heat recording layer 3 from the side of substrate 2.

The means of generating the magnetic field may be any means capable of applying the field to recording layer 3 locally, for example an electromagnet. In this case, electromagnet 6 used as the means of generating the field, is disposed such that it can apply a field to recording layer 3 from the opposite side to laser 5.

When recording, a magnetic field is applied to a region of recording layer 3 heated by laser 5 to a temperature above $T_f$ by switching electromagnet 6 ON, and the region is cooled while applying the field. The magnetization of this region then reaches a high value of $M_B$. When erasing, on the other hand, the region of the recording layer heated above $T_f$ by laser 5, is cooled without applying a magnetic field by switching electromagnet 6 OFF. The magnetization of this region reverts to the low value of $M_A$. It is thus possible to record and erase easily simply by switching the means of generating the magnetic field ON and OFF.

For both recording and erasure, the medium is heated to a temperature above $T_f$. The recording layer may thus be irradiated continuously with laser light, and the electromagnet switched ON only when "1" is to be recorded.

Further, as recording is carried out depending on the presence or absence of the applied magnetic field regardless of the magnetic state of recording layer 3, overwrite can be achieved very easily.

In the above description, we have referred to the initial state as $M_A$, but it may also be $M_B$. The correspondence of "0" and "1" may moreover be reversed. Finally, there is no need for the recording layer to be a single layer, and it may be multi-layer.

In the conventional magneto-optical recording systems, a method of overwriting was developed by modulating the magnetic field. In the case of recording, however, a distinction was made with regard to the orientation of the perpendicular magnetization, a relatively large magnetic field greater than the coercive force of the recording layer was required when modulating the field, and the switching of such a large field in the high frequency region was difficult. In the present invention however, in the case of recording, a distinction is made in terms of the magnitude of magnetization, and the magnetization of the recording layer can be considerably varied by a small magnetic field below the coercive force. Even a field modulation method therefore adapts well to high frequencies.

To read the information (reproduction), there is no particular limitation on the method used provided that it can read the difference of magnetization between the recorded and erase states. The variation of the value of magnetization may be read by, for example, the intensity of a reflected laser beam by means of an magneto-optical effect such as a difference in Faraday rotation angle or Carr rotation angle. Further, the magnitude of the magnetization may of course be read directly by a magnetic head.

According to the present invention, recording, erasure and reading take place without contact.

The magnetization of spin glass magnetic bodies has the property of relaxation. In Fig. 1, for example, the magnetization $M_B$ which arises from cooling in the presence of a magnetic field, gradually approaches $M_A$ with the passage of time. The recording medium could therefore be used as a medium which loses its recording after a certain time has elapsed, but in general, however, it is desirable that the recorded state is maintained accurately for at least a certain time. Improvements made to spin glass magnetic bodies have made it possible to extend the relaxation time, but it is also possible to overcome this problem by forming a bias layer in the recording medium which applies a biasing field to the recording layer.

Fig. 3 shows a typical recording medium which has such a structure. It is basically the same as the medium shown in Fig. 2, and differs from Fig. 2 only in that there is a bias layer 7 in contact with recording layer 3. This bias layer 7 may be situated in any position such that it can apply a magnetic field to recording layer 3, and it is not necessary for it to be situated between reflecting film 4 and recording layer 3 as shown in Fig. 3. Further, as a magnetic field must be generated during the cooling that takes place after recording layer 3 has been heated above $T_f$, the Curie temperature of bias layer 7 must be above $T_f$.

We shall now describe recording and erasure using such a recording medium. Let the initial magnetic state of the recording layer be $M_A$, and assume that bias layer 7 is demagnetized (Fig. 4A). As in the previous case, during recording, the recording medium is cooled in a magnetic field after heating above $T_f$ so that its magnetic state reaches $M_B$, and, the bias layer 7 is also magnetized at this time (Fig. 4B). After recording, therefore, a bias magnetic field is still applied to recording layer 3 by the bias layer 7, and there is no relaxation of magnetization. Recordings can therefore be kept for long periods. Further, for erasure, the recording medium is cooled in the absence of a magnetic field after heating it above the Curie temperature $T_c$ ($T_c > T_f$) of bias layer 7. The magnetic state of the recording layer therefore reverts to $M_A$, bias layer 7 is demagnetized, and the medium returns to the state of Fig. 4A.

It is moreover possible to carry out multi-value recording using the magnetic recording medium of this invention.

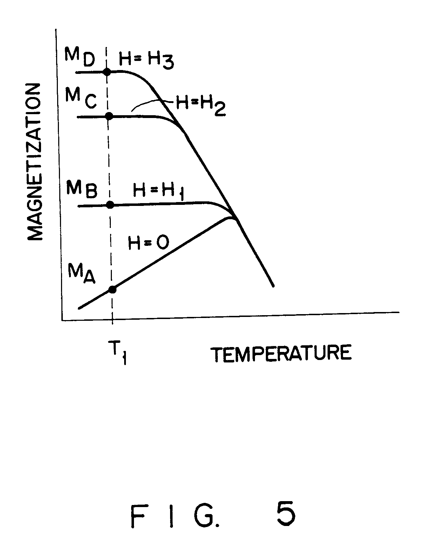

For multi-recording, use is made of the fact that the magnetization of the spin magnetic body varies depending on the magnitude of the applied field during cooling as shown in Fig. 5. If the magnitude of the applied field is in the order $H_0 < H_1 < H_2 < H_3$, and the corresponding magnetizations are $M_A$, $M_B$, $M_C$ and $M_D$, there will exist a relation $M_A < M_B < M_C < M_D$ (Fig. 5). If therefore the applied field is varied in this way when magnetic recording is performed according to the method shown in Fig. 2, states corresponding to these fields can be recorded. For reading, an magneto-optical effect can be used as before. In general, magneto-optical effects vary with the magnitude of the magnetization, and reading can therefore be performed by converting the intensity of magnetization to, for example, a light intensity. Multi-value recording can also be performed by using several layers of spin glass magnetic bodies with different spin freezing temperatures.

In multi-value recording, the relaxation of magnetization of recording layer 3 may also be a problem, but it can again be overcome by installing a bias layer 7. In this case, however, it is preferable to use a material which can generate bias fields according to the values of the magnetizations which are being recorded, that is, a material of which the residual magnetization depends on the magnitude of the applied field. If the bias field applied is too strong, the value of the magnetization of recorded layer 3 may be greater than that required to prevent relaxation, which is undesirable.

Whether for 2 value recording or multi-value recording, the material of the bias layer must show a high rectangularity in its magnetization curve, and must have suitable values of coercive force and Curie temperature. As the rectangularity determines the magnitude of the residual magnetism, it should be as large as possible. If the coercive force is too large, the modulating magnetic field required to write on the medium will be too high, while if the coercive force is too small, the bias layer will cease to function. It is therefore desirable that the coercive force of the bias layer is of the order $7.96 \times 10^3$ A/m - $238.7 \times 10^3$ A/m (100 Oe $\sim$ 3 K0e), and so that the layer can be easily demagnetized by heating, it is desirable that its Curie temperature is of the order of 100 to 200°C.

This bias layer may be either a perpendicular magnetization films or a longitudinary magnetization film. Examples of perpendicular magnetization films which can be used as bias layers are multi-layer films of amorphous rare earths - transition metal alloys, multi-layer films such as Pt/Co and Pd/Co, rare earth garnets, oxide thin films such as Co ferrites and Ba ferrites, and Co-Cr alloys. Examples of longitudinary magnetization films which can be used as bias layers are oxide thin films such as - $Fe_2O_3$ and $Fe_3O_4$, and films of rare earth transition metal alloys. Further, magnetic bodies which show different residual magnetization depending on the applied field, and which can therefore be used as a bias layer for multi-value recording, include multi-layer films such as Pt/Co and Pd/Co, and magnetic films such as Sm (Co, Cu, M)z (where $4.5 \leqq z \leqq 8$, and M is at least one element selected from the group consisting of Fe, Mn, Cr, V, Nb, Ta, Ti, Zr and Hf). The bias layer may also be formed by sputtering or any suitable film-forming technique.

EXAMPLES

We shall now give some examples of this invention.

Example 1

The oxides with the compositions shown in Table 1 were sintered and fabricated into disks. The surface of the disks were smoothed and one of the disks is installed in a target holder in an ion beam sputtering apparatus. Glass was used as the substrate, and the glass substrate was installed in the substrate holder, the pressure in the chamber was reduced to $5.33 \times 10^{-4}$ Pa ( $4 \times 10^{-6}$ Torr). Ar gas was introduced into the ion gun to a gas pressure of $2.67 \times 10^{-2}$ Pa ($2 \times 10^{-4}$ Torr), and oxygen gas was made to flow around the glass substrate at about $1.33 \times 10^{-2}$ Pa ($1 \times 10^{-4}$ Torr). The ion source was a Kaufmann type ion gun, and sputtering was carried out by accelerating the Ar ions to 1 KeV. A thin film of a spin glass magnetic body of a ferrite composition was thus obtained.

Apart from the target compositions used, Table 1 also shows the spin freezing temperature measured by a VSM (vibrating Sample Magnetometer) and a SQUID.

## Table 1

| No. | Composition | Spin freezing temperature |
|-----|-------------|---------------------------|
| 1 | $CoFe_2O_4$ | 300 °K |
| 2 | $CoFe_2O_4$ | 372 °K |
| 3 | $Co_{0.8}Fe_{2.2}O_4$ | 320 °K |
| 4 | $Co_{1.5}Fe_{1.5}O_4$ | 343 °K |
| 5 | $Co_{1.8}Fe_{1.2}O_4$ | 317 °K |
| 6 | $Co_{1.2}Zn_{0.8}FeO_4$ | 389 °K |
| 7 | $Co_{0.5}Zn_{0.5}Fe_2O_4$ | 376 °K |
| 8 | $Co_{0.8}Zn_{0.2}Fe_2O_4$ | 360 °K |
| 9 | $Ni_{0.5}Zn_{0.5}Fe_2O_4$ | 275 °K |
| 10 | $Ni_{0.8}Zn_{0.2}Fe_2O_4$ | 261 °K |
| 11 | $Ni_{0.5}Zn_{0.5}Fe_2O_4$ | 293 °K |
| 12 | $Ni_{0.25}Zn_{0.75}Fe_2O_4$ | 287 °K |
| 13 | $NiFe_{1.5}Cr_{0.5}O_4$ | 255 °K |

In the case of Sample No. 1, the substrate temperature was room temperature, while in the case of Samples No. 2 to No. 13, it was 50°C.

The compositions of Table 1 are target compositions. It was however confirmed that the thin films formed had practically identical compositions to the targets excepting for a slightly different oxygen content.

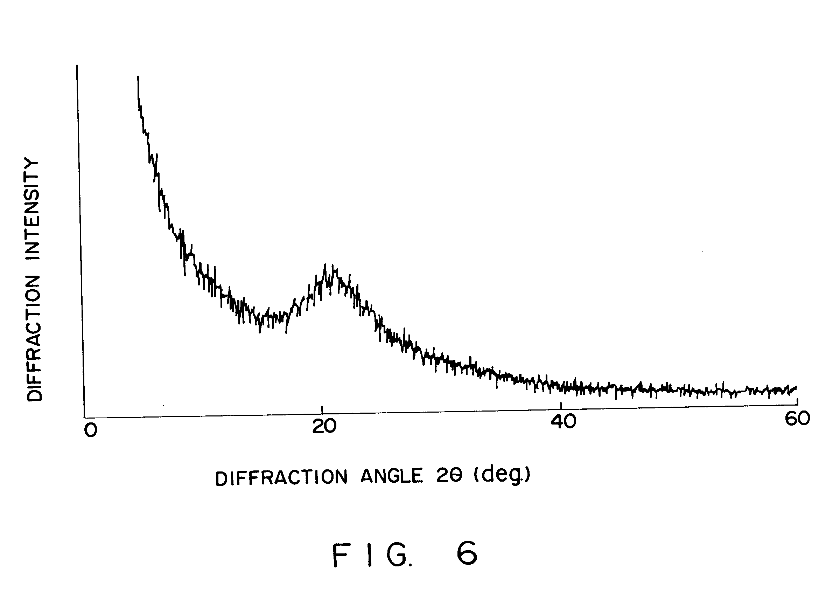

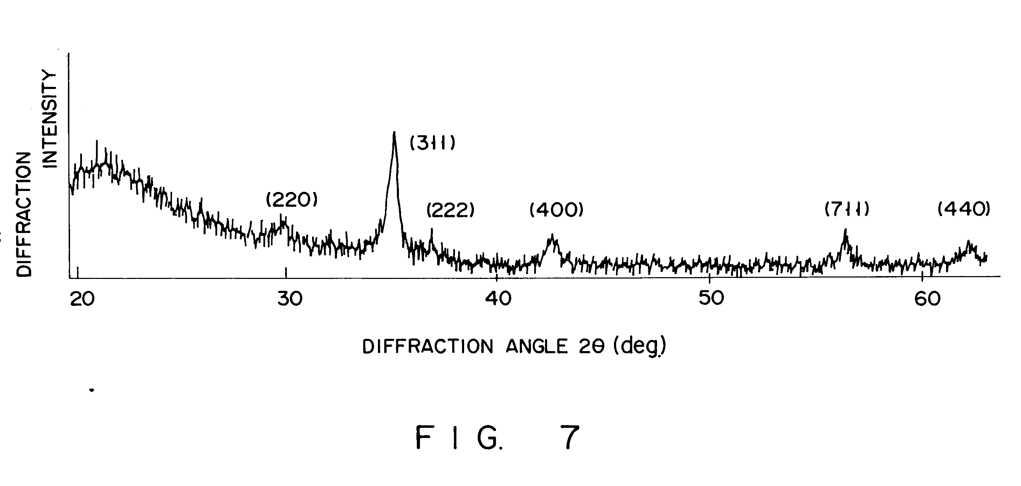

Fig. 6 shows the X-ray diffraction pattern for the $CoFe_2O_4$ of Sample No. 1, while Fig. 7 shows the X-ray diffraction pattern for the $CoFe_2O_4$ of Sample No. 2. No clear diffraction peaks were obtained in Fig. 6, although peaks were obtained in Fig. 7. As can be seen by comparing these figures, therefore, the samples varied widely in crystalline nature.

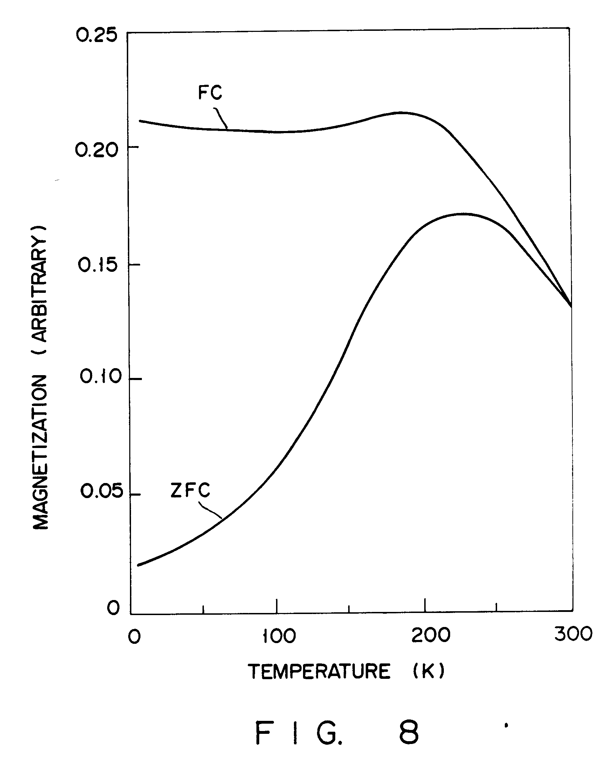

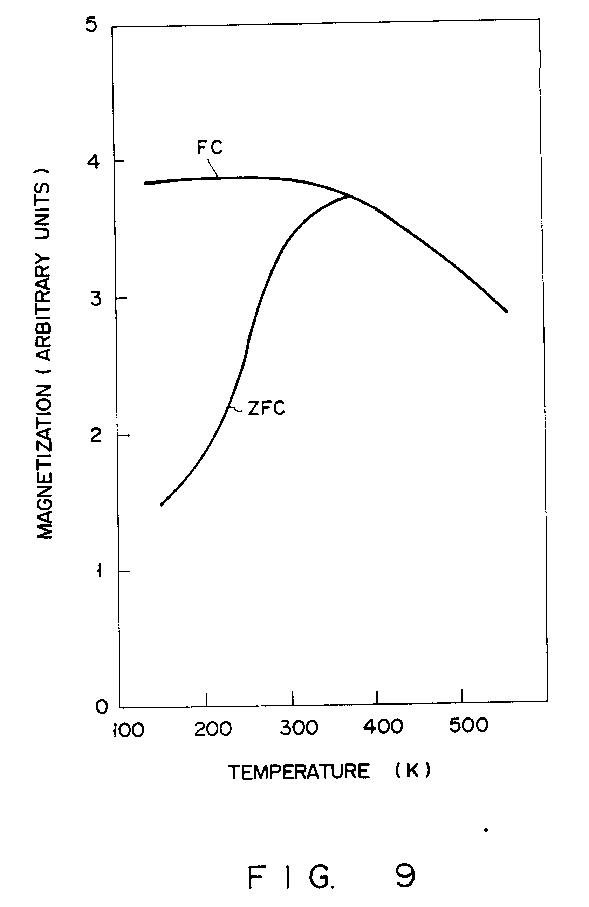

Fig. 8 shows the magnetization variation in the temperature found by SQUID in the case of Sample No. 1. Fig. 9 shows the results for Sample No. 2. In the figure, the curve FC represents the variation of magnetization when the sample is cooled in a magnetic field, and ZFC represents the same variation when it is cooled in the absence of a magnetic field. The temperature at which a difference appears between the magnetizations FC and ZFC is the spin freezing temperature $T_f$. It is seen that both samples have a very high $T_f$ of over 300 K. A high $T_f$ was also found for the other samples listed in Table 1. It was thus confirmed that all spin glass magnetic bodies consisting of thin film ferrite compositions have a high spin freezing temperature. Further, a comparison of composition and $T_f$ showed that ferrite compositions containing Co have a particularly high spin freezing temperature.

Fig. 10 shows the temperature variation of magnetic susceptibility in the case of Sample 1. From this figure, it is seen that in the range 77 K to 327 K, there is a sharp peak in the region of 86 K and a very broad peak in the region of 260 K. This is the first time that oxide compositions having 2 or more magnetic peaks have been discovered.

### Example 2

A $CoFe_2O_4$ amorphous thin film was used as a recording layer. This amorphous Co ferrite film was formed on a glass substrate, and an Al sputter film was formed on this as a reflecting film to constitute the magnetic recording medium.

The recording medium was heated locally by a 5 mW output semiconductor laser in order to raise the temperature of the irradiated area of the recording layer above the spin freezing temperature ($T_f$), as shown in Fig. 2, and was then cooled while applying a magnetic field to generate a ZFC region.

Subsequently, after a similar laser irradiation, the medium was cooled while applying a field of $7.96 \times 10^2$ A/m (10 0e) to generate an FC region.

Next, the laser beam was allowed to impinge from the substrate side, and the light reflected from the reflecting layer was measured. It was found that there was a clear difference in the Faraday rotation angle between the ZFC region and the FC region, showing that the spin glass magnetic body can be used as a magnetic recording medium without any problem.

Example 3

We shall describe an example using the recording medium shown in Fig. 3.

This magnetic recording medium comprised the same amorphous Co ferrite film as that of Example 2 as a recording layer, and a thin film of $Sm(Co_{0.6}, Cu_{0.3}, Fe_{0.1})_{6.8}$ as a bias layer (perpendicular magnetization film with a coercive force of $39.8 \times 10^3$ A/m (500 0e)).

The recording medium was heated locally by a 5 mW output semiconductor laser in order to raise the temperature of the irradiated area of the recording layer above the spin freezing temperature ($T_f$), as shown in Fig. 2, and was then cooled while applying a magnetic field to generate a ZFC region.

Subsequently, after a similar laser irradiation, the medium was cooled while applying a field of $79.6 \times 10^3$ A/m (1 K0e) to generate an FC region.

Next, the laser beam was allowed to impinge from the substrate side, and the light reflected from the reflecting layer was measured. It was found that there was a clear difference in the Faraday rotation angle between the ZFC region and the FC region, showing that the spin glass magnetic body can be used as a magnetic recording medium without any problem.

Further, the recorded information was still properly conserved without any loss 1 month later.

The bias film is not limited to the material used in Example 3, but as the value of the bias field which is generated by said Sm type thin films varies according to the magnitude of the external field, such a material is suitable for multi-value recording.

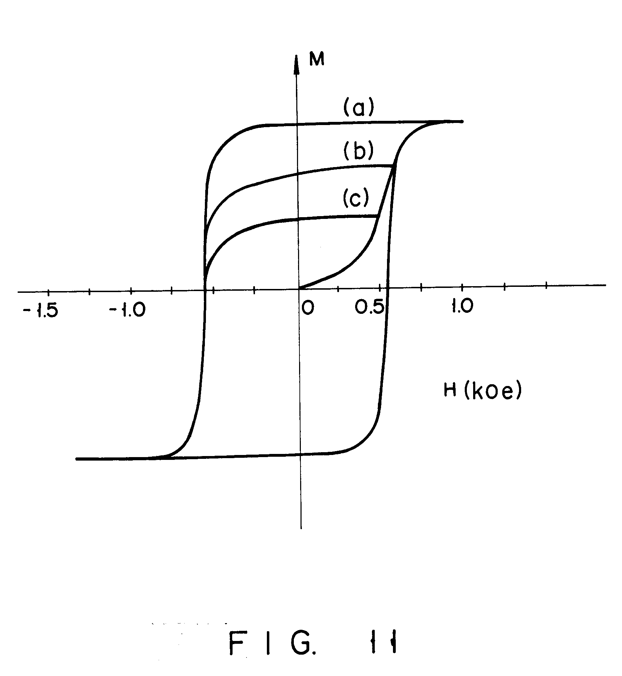

Fig. 11 shows the dependence of the magnetization curve of $Sm(Co_{0.6}, Cu_{0.3}, Fe_{0.1})_{6.8}$ on the external magnetic field.

As can be seen from Fig. 11, if this type of bias film is used, a large variation of residual magnetization is obtained for a small difference of external field (magnitude of external field (a) > (b) > (c)). The magnetization of the recording layer can thus be varied by a small modulating field, and this is useful for high speed modulation.

**Claims**

1. A spin glass magnetic body having an amorphous or microcrystalline ferrite composition.

2. A spin glass magnetic body according to claim 1, which composition contains Co.

3. A spin glass magnetic body according to claim 1, characterized in that the curve of temperature variation of magnetic susceptibility of this body has a plurality of local maximum values.

4. A magnetic recording medium comprising
   a substrate (2), and
   a recording layer (3) including a spin glass magnetic body on the substrate (2), the spin glass magnetic body having an amorphous or microcrystalline ferrite composition.

5. A magnetic recording medium according to claim 4, characterized in that said spin glass magnetic body is in the form of a thin film.

6. A magnetic recording medium according to claim 4, characterized in that the composition of said recording layer (3) contains Co.

7. A magnetic recording medium according to claim 4, characterized by further comprising a bias layer (7) to apply a bias field to said recording layer (3).

8. A magnetic recording apparatus in combination with a magnetic recording medium (1) having a recording layer (3) including a spin glass magnetic body on a substrate (2), said spin glass magnetic body having an amorphous or microcrystalline ferrite composition, said apparatus comprising
   a heating means (5) for heating the spin glass magnetic body of the recording layer above its spin glass freezing temperature, and

a generating means (6) for generating a magnetic field which applies the field to said recording layer (3) while it is cooling, and is able to vary the field between at least 2 values.

## Patentansprüche

1. Spinglas-Magnetkörper mit amorpher oder mikrokristalliner Ferritzusammensetzung.

2. Spinglas-Magnetkörper nach Anspruch 1, wobei die Zusammensetzung Co enthält.

3. Spinglas-Magnetkörper nach Anspruch 1, dadurch gekennzeichnet, daß die Kurve der Temperaturänderung der magnetischen Suszeptibilität dieses Körpers eine Mehrzahl lokaler Maximumwerte aufweist.

4. Magnetisches Aufzeichnungsmaterial, umfassend ein Substrat (2) und eine Aufzeichnungsschicht (3) mit einem Spinglas-Magnetkörper auf dem Substrat (2), wobei der Spinglas-Magnetkörper eine amorphe oder mikrokristalline Ferritzusammensetzung aufweist.

5. Magnetisches Aufzeichnungsmaterial nach Anspruch 4, dadurch gekennzeichnet, daß der Spinglas-Magnetkörper in Form einer dünnen Schicht vorliegt.

6. Magnetisches Aufzeichnungsmaterial nach Anspruch 4, dadurch gekennzeichnet, daß die Zusammensetzung der Aufzeichnungsschicht (3) Co enthält.

7. Magnetisches Aufzeichnungsmaterial nach Anspruch 4, dadurch gekennzeichnet, daß es zusätzlich eine Vormagnetisierungsschicht (7) zum Anlegen eines Vormagnetisierungsfelds an die Aufzeichnungsschicht (3) aufweist.

8. Magnetische Aufzeichnungsvorrichtung in Kombination mit einem magnetischen Aufzeichnungsmaterial (1) mit einer Aufzeichnungsschicht (3) einschließlich eines Spinglas-Magnetkörpers amorpher oder mikrokristalliner Ferritzusammensetzung auf einem Substrat (2), umfassend eine Heizeinrichtung (5) zum Erwärmen des Spinglas-Magnetkörpers der Aufzeichnungsschicht über seine Spinglas-Einfriertemperatur und eine Generatoreinrichtung (6) zur Erzeugung eines Magnetfeldes, welche das Feld an die Aufzeichnungsschicht (3) unter Abkühlung anlegt und zur Änderung des Feldes zwischen mindestens zwei Werten fähig ist.

## Revendications

1. Un corps magnétique à verre de spin ayant une composition de ferrite amorphe ou microcristalline.

2. Un corps magnétique à verre de spin selon la revendication 1, dont la composition contient du Co.

3. Un corps magnétique à verre de spin selon la revendication 1, caractérisé en ce que la courbe de variation de la température de la sensibilité magnétique de ce corps comporte plusieurs valeurs maximales locales.

4. Un support d'enregistrement magnétique comprenant
   un substrat (2), et
   une couche d'enregistrement (3) englobant un corps magnétique à verre de spin sur le substrat (2), le corps magnétique à verre de spin ayant une composition de ferrite amorphe ou microcristalline.

5. Un support d'enregistrement magnétique selon la revendication 4, caractérisé en ce que ledit corps magnétique à verre de spin a la forme d'un mince film.

6. Un support d'enregistrement magnétique selon la revendication 4, caractérisé en ce que la composition de ladite couche d'enregistrement (3) contient du Co.

7. Un support d'enregistrement magnétique selon la revendication 4, caractérisé en ce qu'il comprend en outre une couche de polarisation (7) pour appliquer un champ de polarisation à ladite couche d'enregistrement (3).

8. Un appareil d'enregistrement magnétique, en combinaison avec un support d'enregistrement magnétique (1) comportant une couche d'enregistrement (3), englobant un corps magnétique à verre de spin sur un substrat (2), ledit corps magnétique à verre de spin ayant une composition de ferrite amorphe ou microcristalline, ledit appareil comprenant

un moyen de chauffage (5) pour chauffer le corps magnétique à verre de spin de la couche d'enregistrement au-dessus de la température de congélation du verre de spin, et

un moyen générateur (6) pour engendrer un champ magnétique, appliquant le champ à ladite couche d'enregistrement (3) pendant son refroidissement, et capable de faire varier le champ entre au moins 2 valeurs.

FIG. 1

F I G. 2

F I G. 3

INITIAL STATE
(M_A)

ERASED STATE

| M_A | M_A | M_A | M_A | RECORDING LAYER

BIAS LAYER

# F I G. 4A

LASER BEAM

| M_A | M_B | M_A | M_A |

MAGNETIZED
STATE

MODULATING FIELD

# F I G. 4B

F I G.   5

FIG. 6

DIFFRACTION ANGLE 2θ (deg.)

DIFFRACTION INTENSITY

F I G. 7

EP 0 389 297 B1

F I G. 8

F I G. 9

F I G. 10

F I G.  11